# EUROPEAN PATENT SPECIFICATION

(11) **EP 1 131 953 B1**
(45) Date of publication and mention of the grant of the patent: **20.04.2005**
(21) Application number: 99963004.9
(22) Date of filing: 03.12.1999
(51) Int. Cl.: H04N 7/14, H04N 5/445, H04N 7/173

(54) **SYSTEM AND METHOD FOR PROVIDING NEWS, SPORTS, AND LOCAL GUIDE SERVICES THROUGH AN ELECTRONIC PROGRAM GUIDE**
SYSTEM UND VERFAHREN ZUR BEREITSTELLUNG VON DIENSTEN IM GEBIET VON NACHRICHTEN, SPORT UND ORTSFUEHRUNG DURCH EINE ELEKTRONISCHE PROGRAMMUEBERSICHT
SYSTEME ET PROCEDE PERMETTANT DE FOURNIR DES SERVICES DANS LE DOMAINE DES NOUVELLES, DES SPORTS ET DE L'ACTUALITE LOCALE VIA UN GUIDE ELECTRONIQUE DE PROGRAMME

(30) Priority: 04.12.1998 US 110946 P; 07.12.1998 US 111333 P; 11.12.1998 US 111944 P; 17.06.1999 US 139704 P
(43) Date of publication of application: 12.09.2001
(60) Divisional application: 05002483.5
(73) Proprietor: Index Systems Inc., Pasadena, CA 91101 (US)
(72) Inventor: WARD, Thomas, Edward, III, Weston, MA 02193 (US); HANCOCK, Kenneth, S., Nashua, NH 03062 (US); RALLIS, James, A., Burlingham, MA 01803 (US); SCHOAFF, Peter, Christopher, Westford, MA 01886 (US); WHITEHEAD, Wensdy, Bedford, MA 01730 (US); SUTTON, Jonathon, Concord, MA 01742 (US); MACRAE, Douglas, Weston, MA 02493 (US); DIAS, Stephen, Sharon, MA 02067 (US)
(74) Representative: Kinsler, Maureen Catherine
(86) International application number: PCT/US1999/028722
(87) International publication number: WO 2000/033576

(56) References cited:
- WO-A-96/31980
- WO-A-97/42763
- WO-A-97/50251
- US-A- 5 659 350
- US-A- 5 708 960
- US-A- 5 835 087
- US-A- 5 850 218
- BACH U ET AL: "MULTIMEDIA-TERMINAL ALS ENDGERAET" FUNKSCHAU, FRANZIS-VERLAG K.G. MUNCHEN, DE, vol. 68, no. 6, 1 March 1996 (1996-03-01), pages 70-75, XP000556486 ISSN: 0016-2841

## Description

### FIELD OF THE INVENTION

This invention relates generally to television systems, and more particularly, to television systems providing news, sports, and local guide services through an electronic program guide.

### BACKGROUND OF THE INVENTION

The general public has an ever increasing desire for obtaining up-to-date information relating to a variety of events and activities. For example, consumers like to be informed of current events such as international, national and local news, financial market news, sports results, and entertainment guides, in a real-time manner, without having to wait to see the next day's newspaper or the nightly evening news. Consumers also desire to receive only the information that interests them, without having to wade through other, unwanted information.

Recently, on-line computer services have provided such information to consumers in a controlled, selectable manner. However, the on-line services require the use of expensive specialized equipment such as personal computers, modems, and software, and require a certain level of sophistication and experience using the equipment. Additionally, using such equipment may be awkward and time-consuming in that the consumer needs to go to the personal computer, initialize it, log on to an on-line information service, and request the desired information (possibly paging through many other screens of information in order to locate the desired data).

A more useful information delivery system is needed that combines the real-time information distribution features of an on-line information service with the ease of use, low cost, and existing broadcasting infrastructure of a television system.

An interactive programme guid system is disclosed in WO-A-9631980.

### SUMMARY OF THE INVENTION

The present invention comprises a system and method as set out in the claims, for providing news, sports, and local guide services through an electronic program guide of a television system.

In one embodiment of the invention, providing news, sports, and local guide services (additional services) include storing program schedule information and the additional service information in the memory of a television system. The program schedule information is displayed in a first area of the screen as a grid guide, and one or more advertisements are displayed in panel advertisement windows in a second area of the screen during an EPG mode. The screen further include a list of menu buttons including a sports button, news button, and hometown button.

When each of the menu buttons are actuated, the system displays a plurality of information tiles related to the actuated menu. Specifically, sporting event information about a past, present, or future sporting event is displayed upon actuation of the sports button, news headlines are displayed upon actuation of the news button, and information about local events, businesses, services and products are displayed upon actuation of the hometown button.

In one particular aspect of the invention, the television system's tuner is set to receive a pre-determined channel for display of a program telecast by the channel in a picture-in-picture window upon user actuation of a particular menu button. If the sports button is actuated, the picture-in-picture window may also display a highlight clip of a past sporting event or a preview clip of a future sporting event.

In another particular aspect of the invention, links are provided in the tiles to Internet websites. television programs, or to other services provided through the EPG. A link to a presently televised program causes the tuner to receive a channel televising the program and display the program in a television mode.

It will be appreciated, therefore. that the present invention allows easy and low-cost access to information relating to a variety of news and events. This information is provided through a familiar apparatus using existing broadcasting infrastructure. Users of the system no longer need not purchase and learn how to use personal computers for surfing the web for the desired information. Also, users of the system no longer need to wait to buy and flip through newspapers, magazines, and other media products in search of the information.

### BRIEF DESCRIPTION OF THE DRAWINGS

FIG. 1 is a schematic block diagram of an interactive television schedule system including a television system and a cable box according to one embodiment of the invention;
FIG. 2 is a more detailed schematic block diagram of the cable box of FIG. 1;
FIG. 3 is a more detailed schematic block diagram of the television system of FIG. 1;
FIG. 4 is an illustration of an EPG screen displayed on the television system of FIG. 1;
FIGS. 5A-5C are illustrations of the EPG screen of FIG. 4 upon actuation of a news button;
FIG. 6 is an illustration of the EPG screen of FIG. 4 upon actuation of a sports button;
FIGS. 7A-7B are illustrations of the EPG screen of FIG. 4 upon actuation of a hometown button; and
FIGS. 8A and 8B are user interface screens for requesting hometown information for a particular geographical area.

### DETAILED DESCRIPTION

In general terms, the present system and method is directed to an interactive television schedule system having a television apparatus equipped with an interactive electronic program guide (EPG) which provides additional services besides television program schedule information. Such services include up-to-date information relating to news, sports, and local events and businesses.

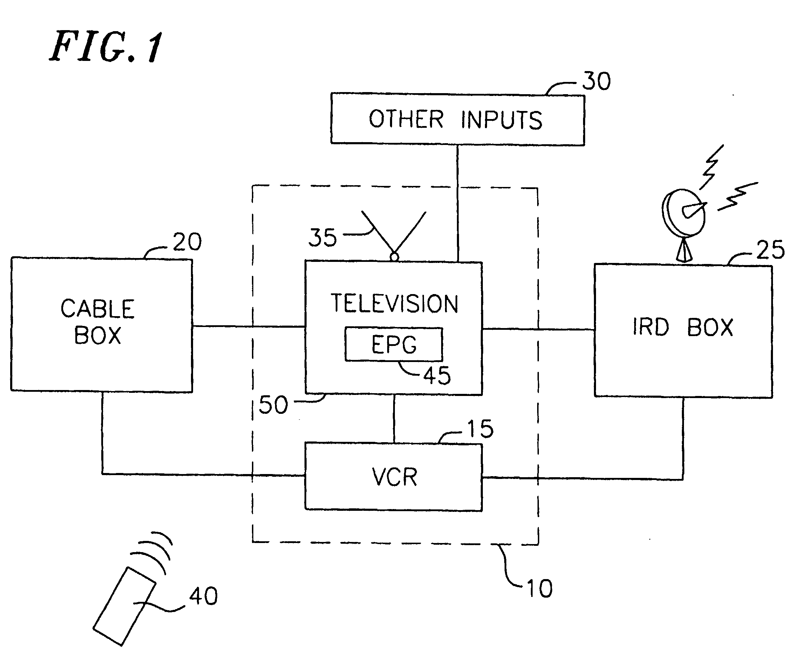

FIG. 1 is a schematic block diagram of an interactive television schedule system according to one embodiment of the invention. The interactive television schedule system includes a television system 45 receiving input from a cable box 20 and an IRD box 25. The television system 10 includes a television 50 and a VCR 15.

The television 50 is configured with an interactive EPG 45 for displaying television schedule information and information relating to additional services (collectively referred to as "EPG data") as is described in further detail below. A viewer interacts with the television 50 and EPG 45 via a viewer input device 40, preferably taking the form of an IR remote control 40, according to conventional methods. Other viewer input devices 40 might also be utilized, such as a keyboard, keypad, joystick, mouse, track ball, touch pad, and the like.

Many different transmission schemes are available for providing the EPG data to the television system 10. For example, EPG data can be provided via cable and/or Direct Broadcast Satellite (DBS) through the cable box 20 and/or IRD box 25, respectively. An antenna 35 coupled to the television 50 can also be used as an additional source of EPG data. Furthermore, the data can be transmitted through other inputs 30 such as conventional satellite systems, coax cables, telephone lines, and fibre optic cables.

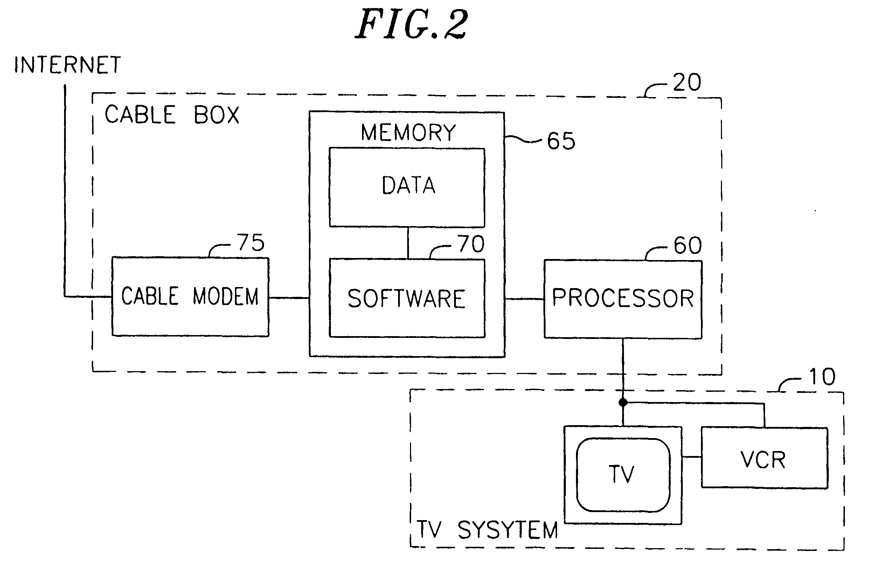

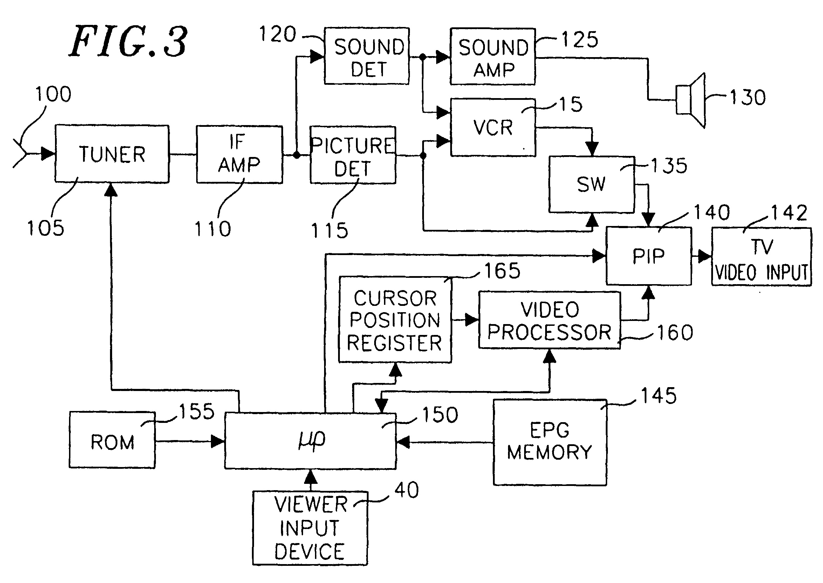

FIG. 2 is a more detailed schematic block diagram of the cable box 20 of FIG. 1 for providing EPG data to the television system 10. As illustrated in FIG. 2, the cable box 20 includes a processor 60 and a memory 65. The memory 65 of cable box 20 stores software 70 for receiving, organizing, and displaying EPG data as well as the EPG data itself. The EPG data, however, is preferably stored in a memory of the television system 10 as is described below in conjunction with FIG. 3.

The memory 65 may further store data related to the viewer's profile and the like. In one embodiment of the invention, a portion of the data stored in memory 65 is obtained via the Internet through a cable modem 75. Other portion of data is generated by the processor from data received from a cable head end.

FIG. 3 is a more detailed schematic block diagram of the television system 10 of FIG. 1. With reference to FIG. 3, a source of television signals 100 such as the antenna 35, cable box 20, or IRD box 25 is connected to a television tuner 105. The output of tuner 105 is a modulated intermediate frequency signal I 10 containing video and audio television information. The tuner 105 is connected by an intermediate frequency amplifier (IF AMP) 110 to a picture detector (PICTURE DET) 115 and a sound detector (SOUND DET) 120, which produce base band video and audio signals, respectively. The audio signal is coupled by a sound amplifier (SOUND AMP) 125 to a loudspeaker 130. The video signal is coupled by a video amplifier (not shown) to one input of a switch 135. The sound detector 120 and picture detector 115 are connected to the audio and video inputs, respectively, of the VCR 15. Alternatively, television signal source 100 could be directly connected to the RF input of the VCR 15 if its internal tuner and demodulating circuitry is to be utilized.

The output of the VCR 15 is connected to the other input of the switch 135. The output of the switch 135 is connected to one input of a conventional picture-in-picture (PIP) integrated circuit chip 140. The output of the PIP chip 140 is connected to the video input 142 of the television 50 having a screen (not shown).

According to one embodiment of the invention, the television system 10 illustrated in FIG. 3 includes an EPG memory 145 for storing updatable databases of EPG data including television program schedule information and information relating to news, sports, and local events and businesses. The databases can be updated by a continuous data link in the vertical blanking interval (VBI) of a television channel broadcast to the television system 10 in well known fashion.

The EPG memory 145 is connected to a microprocessor 150 that is programmed to control the operation of the television 50. An operating program for the microprocessor 150 is stored in a read only memory (ROM) 155. The viewer input device 40 is coupled to the microprocessor 150 to provide commands from the viewer and interact with the EPG.

A video processor 160 is coupled to microprocessor 150. When the viewer wishes to see television program schedule information or information regarding to news, sports, or local events and businesses, the microprocessor 150 recalls a portion of the relevant data from the EPG memory 145 and couples it to video processor 160, where the program listings are formatted for display. Preferably, the information stored in video processor 160 is a bit map of what is displayed on the screen of television 50.

The video processor 160 is further connected to the other input of the PIP chip 140. Preferably, the viewer input device 40 controls the microprocessor 150 by cursor movement on the screen of television 50. To this end, microprocessor 150 and video processor 160 are coupled to a cursor position register 165. Alternatively, the viewer can select items of information displayed on the screen by selecting a particular keys on the viewer input device 40.

The microprocessor 150 is also coupled to the tuner 105 for channel change, to the VCR 15 for play/record selection and start/stop, to the switch 135 for selection of one of its inputs, and to the PIP chip 140 for selection of the mode of PIP operation.

Referring back to the EPG memory 145. television program schedule information stored in a program schedule database of the EPG memory and includes the program schedules of all the available channels for a prescribed period of time, e.g. a day or a week. These program listings typically include for each program the title, a program description. the day of the week, the start time of the day, the program length, and the channel on which the program is transmitted and thus available for reception at source 100. In a preferred embodiment of the invention, the period of time for which the program listings are stored is different for the guides, depending upon viewer priorities and preferences. For example, the information may be stored for one or two days, or for a week or more.

Information relating to news stored in a news database of the EPG memory 145 includes but is not limited to new categories, news headlines, articles relating to the news headlines, graphical images associated with the articles, and links to television programs, Internet websites, and local guide information associated with each article.

Information relating to sports stored a sports database of the EPG memory 145 includes but is not limited to sporting categories, sporting events in each sporting category, team information, scores, statistics, point spreads, and links to television programs, video clips, Internet websites, news articles, and local guide information associated with a sporting event.

Information relating to local events, businesses, products, and services (hometown information) stored in a hometown database of the EPG memory 145 include but is not limited to categories of such hometown information (e.g. movies, theater, restaurants), description of the hometown information, business, addresses, telephone numbers, graphical images related to the hometown information, and links to television programs, Internet websites, and news articles.

According to one embodiment of the invention, the links to television programs stored in the news, sports, and hometown databases include channel, date, time, and length information of a linked television program, or a pointers to an entry of such a program in the program schedule database. The links to Internet websites include URL information to particular web pages. The links to news articles and local guide information include pointers to such entries in the new and hometown databases.

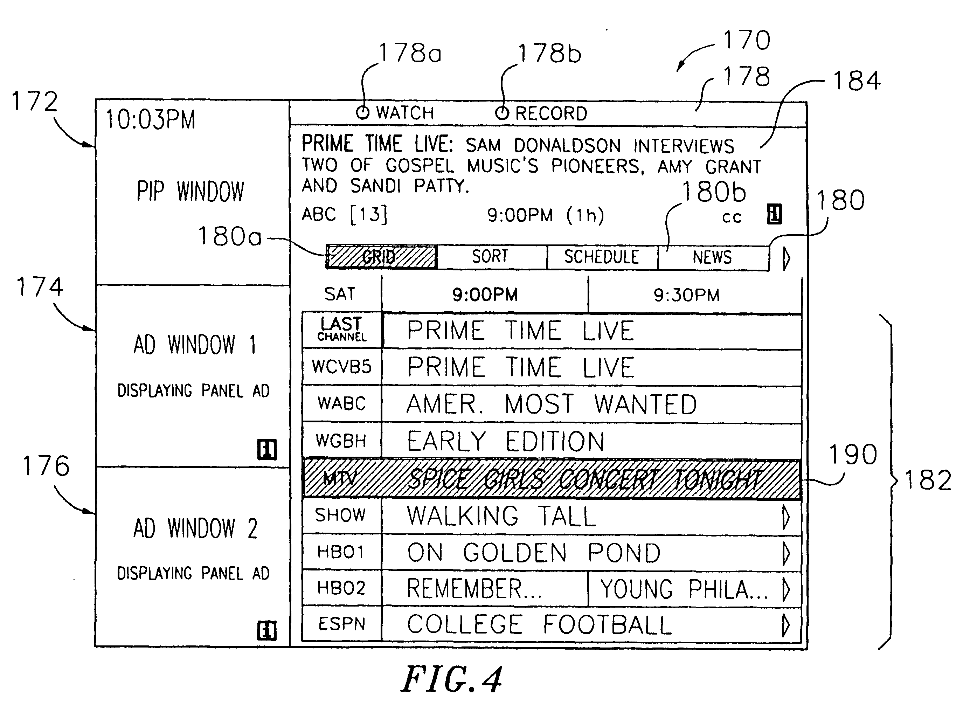

FIG. 4 is an illustration of an EPG screen 170 generated by the video processor 160 under the control of the microprocessor 150. The viewer invokes an EPG guide mode for displaying the EPG screen 170 by pressing a "guide" key on the viewer input device 40. The viewer returns to a full screen television mode by the same key or invoking a linked television program.

The EPG screen 170 is divided into a number of different display areas. A PIP window 172, a first panel ad window 174, and a second panel ad window 176 are arranged along the left side of screen 50. The remainder of the EPG screen 170 is typically occupied by an action key bar 178, a navigation bar 180, a grid guide 182, and an information box 184. In the embodiment illustrated in FIG. 4, the position of the windows. and other user interface features, including the action key bar 178, navigation bar 180 and grid guide 182, are fixed. In another embodiment of this invention, the position and size of the windows and other user interface features are customizable by the viewer.

The PIP window 172 displays real time broadcast programs or pre-recorded video clips produced by the PIP chip 140. A translucent overlay of the PIP window 172 can display a title, channel (local number and/or station name), and status (locked or unlocked) of the PIP window 172.

The first and second panel ad windows 174 and 176 display advertisements for future telecast programs or for products and services. An advertisement for a future telecast program is linked to a time and channel of the program allowing the viewer to watch or record the program automatically by highlighting the advertisement and pressing a watch action button 178a or a record action button 178b,respectively.

Highlighting an advertisement for a product or service allows the viewer to read one or more pages about the product or service from the information box 184. Alternatively, the advertisement is linked to a time and channel of an infomercial allowing the viewer to watch or record the infomercial by highlighting the advertisement and pressing the watch action button 178a or the record action button 178b, respectively.

The viewer accesses television program schedule information by actuating a grid button 180a from a list of menu buttons listed on the navigational bar 180. Upon actuation of the grid button 180a, the grid guide 182 displays a list of television programs with their respective channel designations in a series of program tiles. In addition to the program tiles, the grid guide 22 includes advertisement tiles 190 with virtual channel advertisements. A virtual channel ad may promote, for instance, a current or future television program. Such a virtual channel ad for a television program is linked to a time and channel of the program allowing the viewer to watch or record the program automatically.

### NEWS SERVICE

The viewer further accesses news articles by actuation of a news button 180b from the navigational bar 180. According to one embodiment of the invention, news headlines and related articles to be stored in the news database are transmitted in data packets through the VBI lines of a television channel broadcast along with their corresponding IDs. The IDs depict the service and provider from where the articles emanate. Graphics contained in the articles are also transmitted as graphic object packets through the VBI lines.

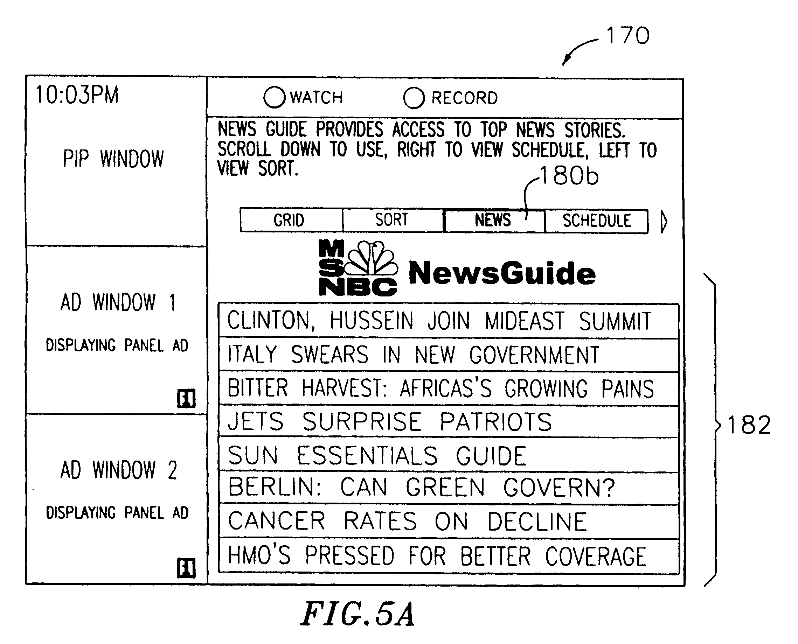

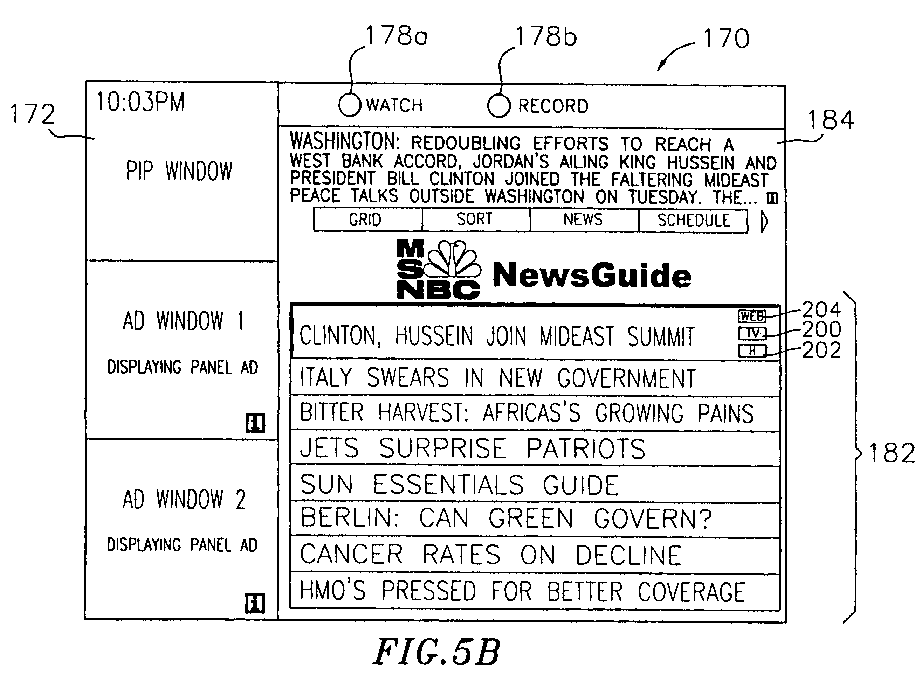

The news button 180b appears upon receipt of a NewsGuide service definition packet transmitted prior to the delivery of any article data packets. FIGS. 5A-5C arc illustrations of the EPG screen 170 upon actuation of the news button 180b. The tuner 105 automatically tunes to a program broadcast by a news service provider such as MSNBC. and the program is displayed on the PIP window 172 of the EPG screen 170. In addition, the grid guide 182 displays a list of news headlines in a series of tiles.

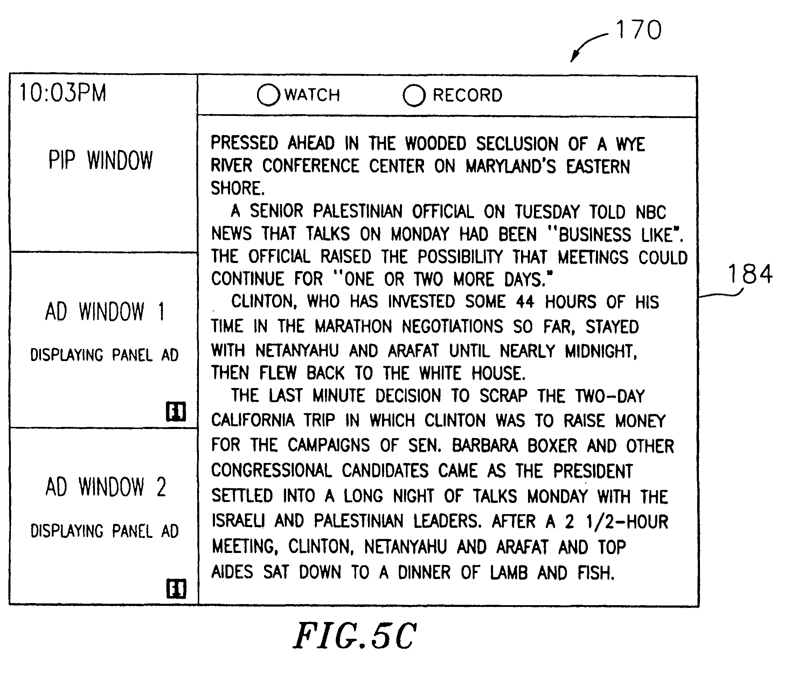

As illustrated in FIG. 5B, highlighting one of the headlines causes the information box 184 to display a portion of a text of a news article associated with the highlighted headline. Selection of an information button on the viewer input device 40 causes the information box 184 to expand to display the remainder of the article as illustrated in FIG. 5C.

According to one embodiment of the invention, the headline tiles are not displayed unless the corresponding headline and lead paragraph have been received. If the full article text has not yet been received upon expansion of the information box 184, the information box 184 just displays the lead paragraph and a "retrieving" icon following the lead paragraph.

The headlines are ordered by display priority from newest (top) to oldest (bottom) based on the date/time of the receipt of the headline. Updated news stories are downloaded by the television system 10 a predetermined number of times a day. In the described embodiment, updates occur two to four times a day. If the viewer is currently reading an article when a new article arrives, the headline of this new article is displayed at the top of the list of headlines. The viewer may also receive an audio or visual indication that a new article has arrived.

According to one embodiment of the invention, the system keeps track of the types of articles most frequently read by the viewer as well as the types of programs most often watched to determine the type of articles to transmit. Advertisements displayed on the panel advertisement windows 174, 176 may also be targeted based on the categories of news stories supplied.

The headlines are color coded based on the type of news article category (e.g. blue headlines indicate a NEWS category, light blue headlines indicate a BUSINESS category, green headlines indicate a SPORTS category, and purple headlines indicate a LIVING category). A viewer may sort the headlines based on the categories or other viewer-determined sorting schemes.

If a television program broadcast presently or in the future is related to a news article, the corresponding headline tile includes a television icon 200 indicating the existence of such a program. For instance, a news article on the current situation in Somalia could be linked to a television program featuring a segment on Somalia. Links may also be provided to relevant articles on the Internet via an Internet icon 204, or to a local event information via a hometown icon 202. These icons may alternatively be inserted in the information box 184 before or after its expansion. The viewer may further be alerted about the links via other visual or audio indicators.

Upon actuation of the television icon 200, information of the linked TV program is displayed on the information box 184. The viewer may then tune directly to the program that is being currently broadcast by selecting the watch action button 178a. If the program is to be broadcast in the future, selection of the watch action button 178a causes the program to be inserted into a list of programs to watch for being tuned to later. In this respect, the microprocessor 150 searches an entry for the news article in the news database. Once such an entry is found, the microprocessor 150 searches the entry for a CDTL code or a pointer to an entry in the program schedule database to locate the linked television program. The link could be to the start of the television program or to a relevant section within the program. Conversely, a television program or segment may have a link to a news article.

The viewer may further record a linked television program by actuating the record action button 178b. If only a portion of the television program related to the news article is to be recorded, the data stream of the television program may be tagged with a flag at the section prior to the transmission of the segment to alert the VCR or tuner that the segment is about to be transmitted. Alternatively, closed caption data could be sliced and text searches done for key words which would indicate the start of a particular segment. In yet another embodiment, the entire program may be taped, and an index could be made of the program based on flags that indicate the start and beginning of each section. A viewer desiring to see a section on Somalia could jump to this section on the recorded tape based on the index. Search of key words on the closed caption could further be used as the source of the index.

Upon actuation of the Internet icon 204, the microprocessor 150 searches the news database for an entry for the selected news article. Once the entry is found, the microprocessor 150 searches the entry for the URL of a particular web page. The microprocessor 150 then invokes the cable modem 75 located in the cable box 20 to connect to the Internet and view the web page.

When the hometown icon 202 is actuated, the microprocessor 150 searches the news database for an entry for the selected news article. Once the entry is found, the microprocessor 150 searches the entry for a pointer to a hometown information listing in the hometown database. The microprocessor 150 invokes a hometown view of the EPG screen as is described in further detail below, and the relevant hometown information is displayed to the viewer.

### SPORTS SERVICE

The viewer accesses information about past, present, and future sporting events by actuating a sports button 180c. According to one embodiment of the invention, scores of various sporting events and other sports related information to be stored in the sports database are transmitted in data packets through the VBI lines of a television channel broadcast along with their corresponding IDs. The IDs depict the service and provider from where the sports related information emanates. Any graphics related to this information are also transmitted as graphic object packets through the VBI lines.

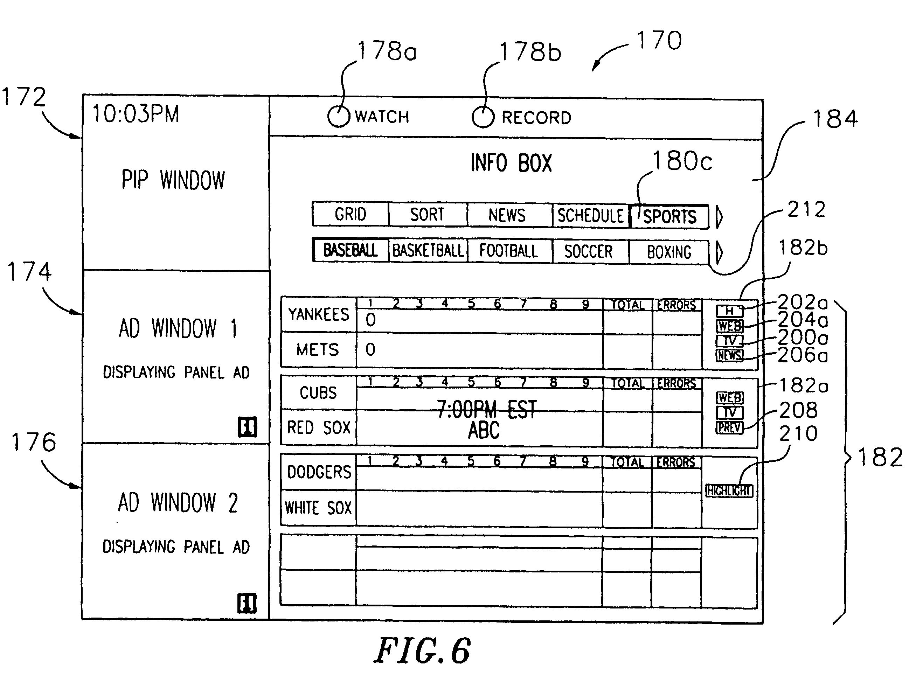

The sports button 180c appears upon receipt of a SportsGuide service definition packet transmitted prior to the delivery of any sports related data packets. FIG. 6 is an illustration of the EPG screen 170 upon actuation of the sports button 180c. The tuner 105 automatically tunes to the program broadcast by a sports service provider such as ESPN, and the program is displayed on the PIP window 172 of the EPG screen 170. In addition, the grid guide 182 displays a list of past, present, and future sporting events and associated information in a series of tiles.

A game scheduled in the future 182a has associated with it information as to which teams are playing, when the game is to occur, the network station televising the game, and preview information about the game such as statistics, rankings, and point spread. The preview information might be displayed in the information box 184. In addition, a preview video clip related to the game is displayed in the PIP window 172 upon actuation of a preview icon 208.

A game currently in progress 182b has associated with it a scoreboard with the name and/or logo of a home team appearing on the top row of the scoreboard, and the name and/or logo of the visiting team appearing on the bottom row of the scoreboard. The scoreboard in the described embodiment is designed to look like a scoreboard that the viewer would see if present at the actual game. For instance, in baseball, the scoreboard includes the number of runs for each inning as well as a total score and a number of errors and/or hits.

Highlighting of a game in progress causes the display of further information related to the game in the information box 184. For instance, if a touchdown is made by a team associated with the highlighted game, the information box 184 provides information such as who made the touchdown and how the touchdown was made. The information box is constantly updated as a new event occurs. Preview information related to the game is also available even after the start of the game upon selection of a preview icon.

After a game is over, the information box 184 displays wrap-up information about the game. The guide further allows the viewer to view clips of highlights of the game in the PIP window 172 upon selection of a highlights icon 210. The clip may already be stored in the sports database of the EPG memory 145. Alternatively, the video clip may be transmitted via a dedicated channel upon selection of the highlights icon 210. A viewer may further view preview information and update information that would have been displayed throughout the game even after a game is over.

Various methods may be utilized to determine the order of the sporting categories displayed in the sports guide. According to one embodiment of the invention, the viewer customizes the order of the sporting categories via an Editor window. For instance, if the viewer is most interested in football scores. he could select to have all the football scores displayed first. The Editor window further allows the viewer to delete certain sporting categories and/or teams from the guide in which the viewer has no interest.

In an alternative embodiment, the sporting categories are organized based on the sporting season. During basketball season, for instance. all the basketball scores are displayed first. In another embodiment, the sporting categories are organized based on the type of sports watched most often by the viewer, or based on the type of sporting event most often selected from the sports guide. The teams within each sporting category are organized utilizing similar methods. In one embodiment of the invention, the viewer's local team appears at the top of each category, with the remaining teams appearing in alphabetical order.

Each sporting category may further be distinguished visually in addition to a text description. In one embodiment, each sporting category is displayed in a distinct color, allowing the viewer to quickly identify a sporting category by simply recognizing the color to which it is related. Logos (e.g. the Official NBA logo) may also be utilized to distinguish the categories.

The initial page of the sports guide displays information about all the sporting categories sorted in the manner described above. Advertisements are also displayed along with the sports guide in the panel advertisement windows 174, 176. The advertisements may relate to sports in general. Otherwise, advertisements are targeted to the type of sports the viewer watches most, or to a currently selected sporting event.

As the viewer pages sideways on the sports guide, each page is devoted to a single sporting category. Alternatively, the viewer may page down to view additional tiles in the current category. Smart buttons 212 or a menu of sporting categories may also be provided, allowing the viewer to jump to a sporting page of interest.

The sporting event tiles displayed in the grid guide 182 may include links to televised sporting events broadcast presently or in the future. Such links are indicated by a television icon 200a. Conversely, a televised sporting event may have a link to the sports guide alerting the viewer that this event appears on the guide.

Links may also be provided to relevant websites on the Internet via an Internet icon 204a, as well as to news articles via a news icon 206a, and local event information via a hometown icon 202a. The viewer is may also be alerted about a link via other visual or audio indicators.

Upon actuation of the television icon 200, information of the linked TV program is displayed on the information box 184. The viewer may then tune directly to the program that is being currently broadcast by selecting the watch action button 178a. If the program is to be broadcast in the future, selection of the watch action button 178a causes the program to be inserted into a list of programs to watch for being tuned to later. In this respect, the microprocessor 150 searches the sports database for an entry for the sporting event. Once the entry is found, the microprocessor 150 searches the entry for a CDTL code or a pointer to an entry in the program schedule database to locate the linked television program.

A linked TV program may be recorded by means of a traditional VCR 15 or a random access recording device such as a rewriteable DVD or a hard disk upon actuation of the record action button 178b. An index is then made of the different sporting events recorded based on flags that indicate the start and end of each event. A viewer desiring to see a particular sporting event can jump to this section on the recorded tape, DVD, or hard disk based on the index. In the described embodiment, the index is created by searching key words on the closed caption data.

Upon actuation of the Internet icon 204a, the microprocessor 150 searches the sports database for an entry for the selected sporting event. Once such an entry is found, the microprocessor 150 searches the entry for the URL of a particular web page. The microprocessor 150 then invokes the cable modem 75 located in the cable box 20 to connect to the Internet and view the web page.

When the hometown icon 202 is actuated, the microprocessor 150 searches the hometown database for an entry for the selected sporting event. Once such an entry is found, the microprocessor 150 searches the entry for a pointer to a hometown information listing in the hometown database. The microprocessor 150 invokes a hometown view of the EPG screen as is described in further detail below, and the relevant event or business information is displayed to the viewer. For instance, the information may relate to how to purchase tickets for a locally occurring sporting event, as well as the seats available and the prices for the different seats.

When the news icon 206a is actuated, the microprocessor 150 searches the sports database for an entry for the selected sporting event. Once such an entry is found, the microprocessor 150 searches the entry for a pointer to a news article in the news database. The microprocessor 150 invokes a news guide viewofthe EPG screen as described above in conjunction with FIGS. 5A-5C, and the relevant news article is displayed to the viewer.

According to one embodiment of the invention, a viewer tuned to a game may switch to a different channel upon the start of a commercial. When the commercials are over and the game has resumed, the viewer is alerted to this fact either visually or by audio. The viewer may then manually switch back to the channel broadcasting the game, or the television may be configured to automatically tune to the channel. Using similar methods, a VCR could be configured to record a game free of commercials.

Closed captioning data is utilized in the described embodiment to detect that the commercials is over. Closed captioning data is sliced and text searches are performed for key words indicating the end of commercials and/or the start of the game.

### HOMETOWN SERVICE

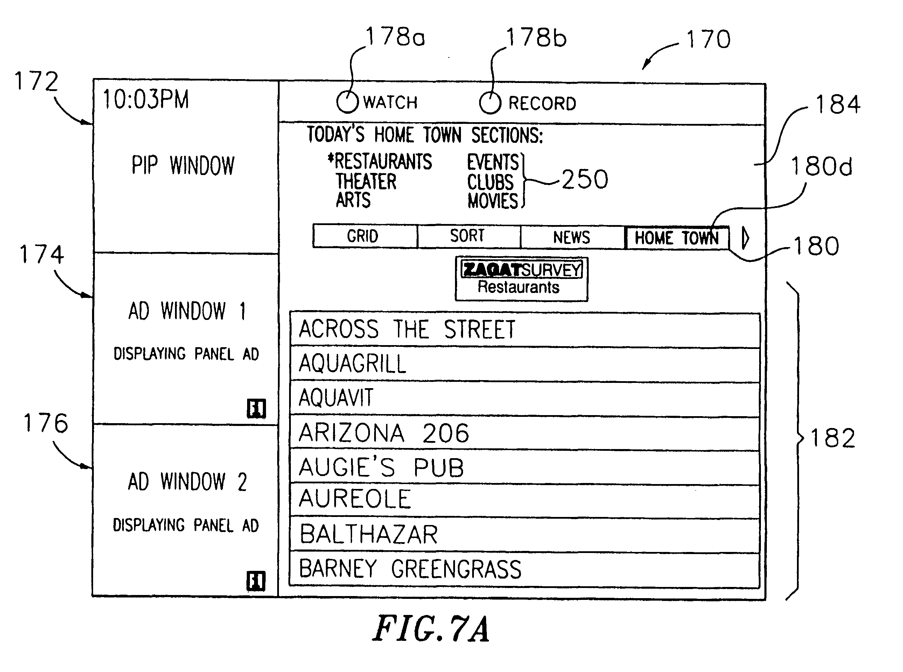

As illustrated in FIGS. 7A-7B, the viewer accesses the local information guide (hometown guide) of a particular geographical area by actuation of a hometown button 180d from the navigational bar 180. According to one embodiment of the invention, information about local events, businesses, services, and products (hometown information) to be stored in the hometown database are transmitted in data packets through the VBI lines of a television channel broadcast along with their corresponding IDs. The IDs depict the service and provider from where the hometown information emanates. Any graphics related to this information are also transmitted as graphic object packets through the VBI lines. The hometown button 180d appears upon receipt of a HomctownGuide service definition packet transmitted prior to the delivery of any hometown data packets.

One or more content providers supply up-to-date hometown information to the viewer. An exemplary content provider for restaurant information is ZAGAT™.

According to one embodiment of the present invention, a default geographical area, the user's "hometown," is specified by the viewer as the viewer's zip code during setup initialization of the television system 10. Alternatively, the EPG can learn the user's hometown area from information collected by the EPG from the operation of the television, such as from the channels received by the television.

The hometown guide is at the highest level, a directory to the various categories of hometown information. The hometown guide further provides increasingly detailed supplemental levels of information on the EPG screen 170 based on the viewer interaction with the EPG screen.

Upon actuation of the hometown button 180d, the EPG screen 170 displays a list of sub-menu entries 250 in the information box 184. These entries include a restaurant guide, theater guide, arts guide, events guide, clubs guide, and movies guide.
The EPG screen 170 further displays a list of items belonging to a default sub-menu entries 250 in the grid guide 182 as a series of tiles. Thus, if the default sub-menu entry is the restaurant guide as depicted in FIGS. 7A-7B, a list of restaurants in the local area is retrieved from the hometown database and displayed in the grid guide 182.

According to one embodiment of the invention, the default category is the first sub-menu entry listed in the information box 184. In an alternative embodiment, the default category is customized by the viewer during setup via an Editor window. In yet another embodiment, the default category is based on the viewer's profile.

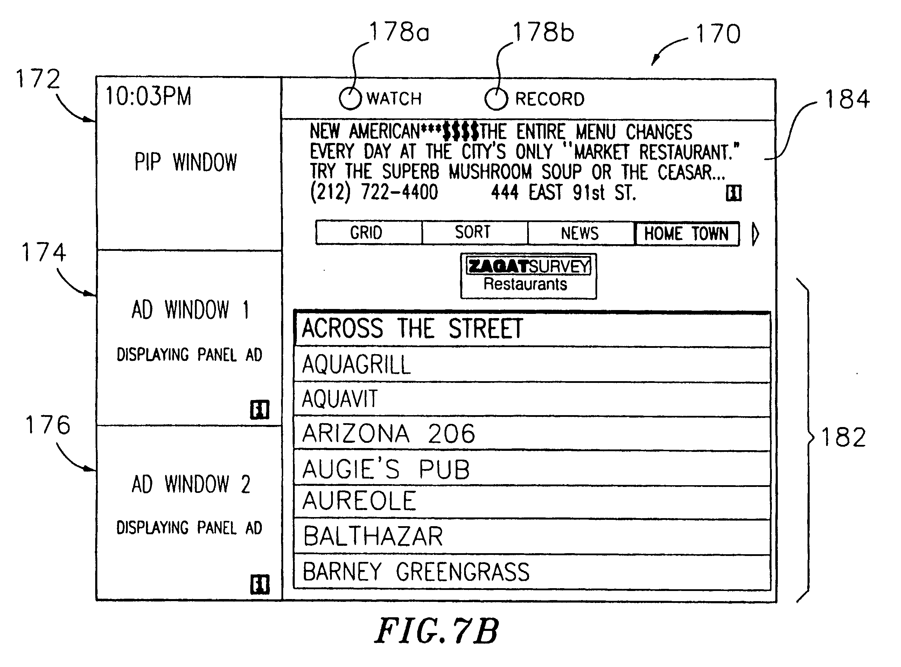

The viewer uses the viewer input device 40 to move a screen cursor up or down the list of tiles in the grid guide 182. As the cursor highlights a particular tile, the microprocessor 150 retrieves information about the listed item from the hometwon database. In the restaurant example of FIG. 7B. highlighting of a restaurant tile causes the microprocessor to display in the information box 184 information about the restaurant's address, telephone number, type of food served, price range, recommended menu items, and restaurant review information, and the like.

If multiple levels of information are available for a highlighted item, only a portion of the information is initially displayed in the information box 184. For each type of information provided, the user can access ("drill down through") one or more layers of detailed information about a selection. The user requests additional information about the highlighted item by selecting an information button in the viewer input device 40.

For instance, detailed information about a highlighted restaurant might include a particular restaurant's menu, directions to the restaurant, a map to the restaurant, and information about the main chef. As another example of detailed information, if the viewer has highlighted a particular upcoming event after selecting an event sub-menu entry, the viewer can view information about the seating arrangement of the event site, such as the seats and prices for a football stadium for a particular game, or for a particular concert hall for a particular concert or theatrical production.

According to one embodiment of the invention, a back channel is utilized to allow the viewer to order tickets and merchandise, make reservations for dinner, schedule doctor appointments, and the like, directly from the hometown service guide.

The panel advertisement windows 174, 176 of the EPG screen 170 may be linked to specific or unique areas of the hometown service. For instance, a credit card company may display an ad in one of the panel advertisement windows 174, 176 whenever a restaurant is selected which accepts its card. As another example, a selected restaurant can advertise a Sunday Brunch offer. If the viewer is in the movies category, an advertisement of the movie may be displayed in the panel advertisement windows 174, 176, or a preview of the movie may be displayed on the PIP window 172.

The hometown guide supplements the hometown information with links to television programs broadcast presently or in the future. For instance, a particular movie listing might be linked to an upcoming Siskel & Ebert television program reviewing the selected movie. The link could be to the start of the television program or to a relevant section within the program. Conversely, a television program or segment may have a link to a particular listing in the hometown service guide. The existence of a television program link is indicated by a television icon. Links may also be provided to relevant websites on the Internet via an Internet icon or a news article via a news icon. The viewer may further be alerted about the links via other visual or audio indicators.

Upon actuation of the television icon 200, information of the linked TV program is displayed on the information box 184. The viewer may then tune directly to the program that is being currently broadcast by selecting the watch action button 178a. If the program is to be broadcast in the future, selection of the watch action button 178a causes the program to be inserted into a list of programs to watch for being tuned to later. In this respect, the microprocessor 150 searches the hometown database for an entry of a particular hometown listing on the grid guide 182. Once such an entry is found, the microprocessor 150 searches the entry for a CDTL code or a pointer to an entry in the program schedule database to locate the linked television program. The link could be to the start of the television program or to a relevant section within the program.

The viewer may record a linked television program by actuating a record action button 178b. If only a portion of the television program related to the hometown listing is to be recorded, the data stream of the television program may be tagged with a flag at the section prior to the transmission of the segment to alert the VCR or tuner that the segment is about to be transmitted. Alternatively, closed caption data could be sliced and text searches done for key words which would indicate the start of a particular segment. In yet another embodiment, the entire program may be taped, and an index could be made of the program based on flags that indicate the start and beginning of each section. A viewer desiring to see a particular section of the program could jump to this section on the recorded tape based on the index. Search of key words on the closed caption could further be used as the source of the index.

Upon actuation of the Internet icon, the microprocessor 150 searches an entry for the hometown listing in the hometown database. When such an entry is found, the microprocessor 150 searches the entry for the URL of a particular web page. The microprocessor 150 then invokes the cable modem 75 located in the cable box 20 to connect to the Internet and view the web page.

When the news icon is actuated, the microprocessor 150 searches the hometown database for an entry for the selected hometown listing. Once such an entry is found, the microprocessor 150 searches the entry for a pointer to a news article in the news database. The microprocessor 150 invokes a news view of the EPG screen as described above in conjunction with FIGS. 5A-5C and displays the relevant news article.

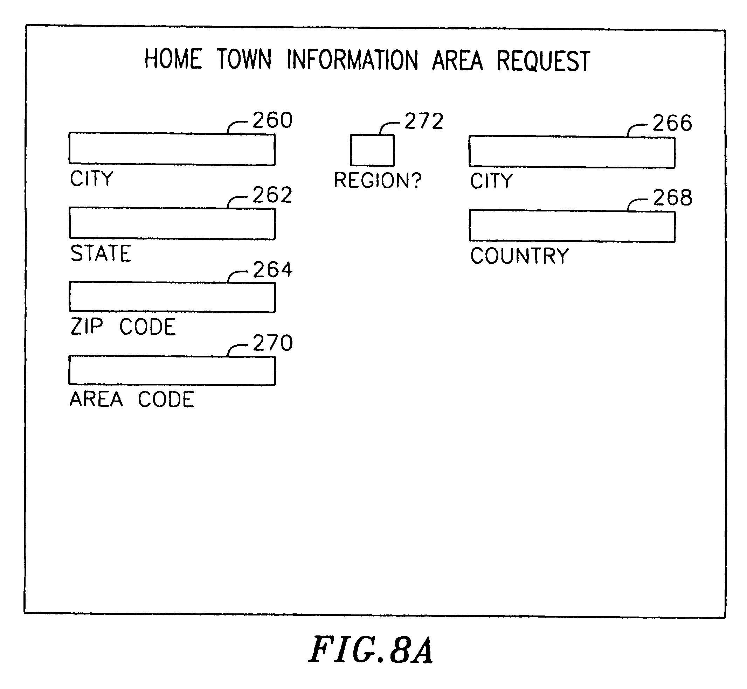

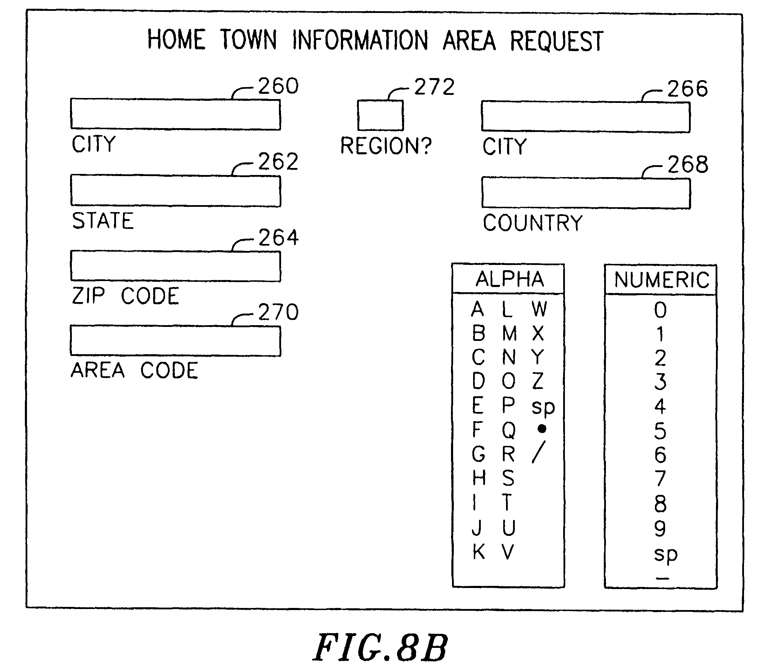

Although according to the above described embodiment default information accessed through the hometown guide is information of the town or city where the viewer resides, the viewer may also access localized information of other cities. There are several ways in which the user can specify a particular geographical area for which hometown information is desired. FIGS. 8A and 8B are user interface screens for requesting hometown information for a particular geographical area. The viewer utilizes the viewer input device 40 to enter the name of a city 260 and state 262, for a city 266 and country 268, or a region 272. The user can further focus the search by entering a narrower description of the geographical area such as a zip code 264 or a particular telephone area code 270.

In another embodiment of the invention as illustrated in FIG. 8B. the user interface screen includes pull-down menus to allow the user to spell the name of a city, state, or country, or enter numbers to specify a zip code or telephone area code. In this regard, the viewer selects an area for which an entry is to be made, moves the cursor to an alpha pull-down menu 274 or a numeric pull-down menu 276, and selects the appropriate letters or numbers. As an alternative to the pull-down menus, the user interface screen presents a graphical display of a keyboard.

Although the present invention has been described in certain specific embodiments. many additional modifications and variations would be apparent to those skilled in the art. For instance, the EPG data might be stored in one or more locations, such as on different servers accessible through a global communications network such as the Internet. In another embodiment the EPG data is stored in a database at a central location, such as in a database that is part of the EPG provider's computer system. It is therefore to be understood that this invention may be practiced otherwise than is specifically described without the exercise of further inventive activity.

## Claims

1. A method for providing news services through a television apparatus having a tuner, memory and screen, the method comprising:
storing program schedule information and news information in the memory;
displaying a portion of the program schedule information on the screen during an electronic program guide mode;
displaying a plurality of menu buttons including a news button during the electronic program guide mode;
displaying a plurality of tiles listing news headlines upon user actuation of the news button, the tiles including a television icon if a television program is associated with the listed news headline;
setting the tuner to receive a channel televising the program associated with a listed news headline in response to a user command to link to the channel from the tile listing the news headline;
displaying the program in a television mode; and
alerting a viewer of a new news item downloaded into the memory.

2. The method of claim 1 including automatically setting the tuner to receive a pre-determined news channel for display of a program telecast by the channel in a picture-in-picture window of the screen upon user actuation of the news button.

3. The method of claim 1, wherein the program schedule information is displayed on a first area of the screen and an advertisement is displayed on a second area of the screen.

4. The method of claim 1 further comprising providing an Internet icon in the tiles for linking to a website related to a news headline listed on the tile.

5. The method of claim 1 further comprising providing a hometown icon in the tiles for displaying hometown information related to a news headline listed on the tile.

6. A system for providing news services through an electronic program guide, the system comprising: a display screen;
a memory for storing program schedule information and news information;
means for displaying a portion of the program schedule information in a first area of the screen and an advertisement in a second area of the screen during an electronic program guide mode;
means for displaying a plurality of menu buttons including a news button during the electronic program guide mode;
means for displaying a plurality of tiles listing news headlines upon user actuation of the news button, the tiles including a television icon if a television program is associated with the listed news headline;
a viewer input device for receiving a user command;
a tuner for tuning to a channel televising the program associated with a listed news headline responsive to the user command to link to the channel from the tile listing the news headline; and
means for alerting a viewer of a new news item downloaded into the memory.

7. The system of claim 6 further including a picture-in-picture chip for causing a display of the pre-determined news channel in a picture-in-picture window.

8. The system of claim 6 further including means for linking to a website related to a news headline listed on the tile.

9. The system of claim 6 further including means for linking to a hometown information related to a news headline listed on the tile.

## Patentansprüche

1. Verfahren zur Bereitstellung von Nachrichtendienstleistungen über ein Fernsehgerät mit einem Tuner, Speicher und Bildschirm, wobei das Verfahren Folgendes umfasst:
das Speichern von Programmvorschauinformationen und Nachrichteninformationen im Speicher;
das Anzeigen eines Teils der Programmvorschauinformationen auf dem Bildschirm während eines elektronischen Programmfiihrermodus;
das Anzeigen mehrerer Menütasten, einschließlich einer Nachrichtentaste während des elektronischen Programmführermodus;
das Anzeigen mehrerer Felder, welche bei Betätigung der Nachrichtentaste durch den Nutzer Nachrichtenschlagzeilen auflisten, wobei die Felder ein Fernsehsymbol enthalten, wenn ein Fernsehprogramm zu der aufgeführten Nachrichtenschlagzeile gehört;
das Einstellen des Tuners zum Empfang eines Kanals, welcher das zu einer aufgeführten Nachrichtenschlagzeile gehörende Programm ausstrahlt, als Reaktion auf einen Nutzerbefehl zur Verbindung mit diesem Kanal aus dem Feld, welches die Nachrichtenschlagzeile auflistet;
das Anzeigen des Programms in einem Fernsehmodus; und
das Informieren eines Zuschauers über eine neue Nachrichteneinheit, welche in den Speicher heruntergeladen wurde.

2. Verfahren nach Anspruch 1, welches das automatischen Einstellen des Tuners auf den Empfang eines voreingestellten Nachrichtenkanals zum Anzeigen einer Programmsendung durch den Kanal in einem Bild-in-Bild-Fenster des Bildschirms nach Betätigung der Nachrichtentaste durch den Nutzer beinhaltet.

3. Verfahren nach Anspruch 1, wobei die Programmvorschauinformationen in einem ersten Bereich des Bildschirms angezeigt werden, und eine Werbung wird in einem zweiten Bereich des Bildschirms angezeigt.

4. Verfahren nach Anspruch 1, welches ferner das Bereitstellen eines Internet-Symbols in den Feldern zur Verbindung mit einer Website umfasst, welche zu einer in dem Rahmen aufgeführten Nachrichtenschlagzeile gehört.

5. Verfahren nach Anspruch 1, welches ferner das Bereitstellen eines Heimatstadt-Symbols in den Feldern zum Anzeigen von Heimatstadtinformationen umfasst, welche zu einer in dem Rahmen aufgeführten Nachrichtenschlagzeile gehören.

6. System zur Bereitstellung von Nachrichtendienstleistungen über einen elektronischen Programmführer, wobei das System Folgendes umfasst:
einen Anzeigebildschirm;
einen Speicher zum Speichern von Programmvorschauinformationen und Nachrichteninformationen;
Mittel zum Anzeigen eines Teils der Programmvorschauinformationen in einem ersten Bereich des Bildschirms und einer Werbung in einem zweiten Bereich des Bildschirms während eines elektronischen Programmführermodus;
Mittel zum Anzeigen mehrerer Menütasten, einschließlich einer Nachrichtentaste, während des elektronischen Programmführermodus;
Mittel zum Anzeigen mehrerer Felder, welche bei Betätigung der Nachrichtentaste durch den Nutzer Nachrichtenschlagzeilen auflisten, wobei die Felder ein Fernsehsymbol beinhalten, wenn ein Fernsehprogramm zu der aufgeführten Nachrichtenschlagzeile gehört;
eine Zuschauereingabekomponente zum Empfangen eines Nutzerbefehls;
einen Tuner zum Einstellen auf einen Kanals, welcher das zu einer aufgeführten Nachrichtenschlagzeile gehörende Programm ausstrahlt, als Reaktion auf einen Nutzerbefehl zur Verbindung mit diesem Kanal aus dem Feld, welches die Nachrichtenschlagzeile auflistet; und
Mittel zum Informieren eines Zuschauers über eine neue Nachrichteneinheit, welche in den Speicher heruntergeladen wurde.

7. System nach Anspruch 6, welches ferner einen Bild-in-Bild-Chip umfasst, durch den eine Anzeige des voreingestellten Nachrichtenkanals in einem Bild-in-Bild-Fenster veranlasst wird.

8. System nach Anspruch 6, welches ferner Mittel zur Verbindung mit einer Website umfasst, welche zu einer in dem Feld aufgeführten Nachrichtenschlagzeile gehört.

9. System nach Anspruch 6, welches ferner Mittel zur Verbindung mit einer Heimatstadtinformation umfasst, welche zu einer in dem Feld aufgeführten Nachrichtenschlagzeile gehört.

## Revendications

1. Procédé permettant de fournir des services dans le domaine des nouvelles par un téléviseur comprenant un syntoniseur, une mémoire et un écran, le procédé comprenant les éléments suivants :
le stockage d'informations sur les grilles de programmes et d'informations liées à l'actualité dans la mémoire;
l'affichage sur l'écran d'une partie des informations sur les grilles de programmes en mode guide électronique de programmes ;
l'affichage d'une pluralité de boutons de menu, y compris un bouton nouvelles, en mode guide électronique de programmes ;
l'affichage d'une pluralité de fenêtres en mosaïque reprenant dans une liste des titres de l'actualité lors de l'actionnement par l'utilisateur du bouton nouvelles, les fenêtres en mosaïque comprenant une icône télévision si un programme de télévision est associé au titre de l'actualité repris dans la liste ;
le réglage du syntoniseur pour recevoir un canal retransmettant à la télévision le programme associé à un titre de l'actualité repris dans la liste en réaction à une commande utilisateur d'établir un lien vers le canal depuis la fenêtre en mosaïque reprenant le titre de l'actualité dans la liste;
l'affichage du programme en mode télévision, et
l'avertissement d'un téléspectateur d'une nouvelle information téléchargée dans la mémoire.

2. Procédé suivant la revendication 1 comprenant le réglage automatique du syntoniseur pour recevoir un canal d'actualités prédéterminé pour l'affichage d'un programme télédiffusé par le canal dans une fenêtre incrustée de l'écran lors de l'actionnement par l'utilisateur du bouton nouvelles.

3. Procédé suivant la revendication 1, dans lequel les informations sur les grilles de programmes sont affichées dans une première zone de l'écran et une publicité est affichée dans une deuxième zone de l'écran.

4. Procédé suivant la revendication 1 comprenant en outre la mise à disposition d'une icône Internet dans les fenêtres en mosaïque pour établir un lien vers un site Web se rapportant à un titre de l'actualité repris dans une liste dans la fenêtre en mosaïque.

5. Procédé suivant la revendication 1 comprenant en outre la mise à disposition d'une icône activités régionales dans les fenêtres en mosaïque pour afficher des informations sur les activités régionales se rapportant à un titre de l'actualité repris dans une liste dans la fenêtre en mosaïque.

6. Système permettant de fournir des services dans le domaine des nouvelles par un guide électronique de programmes, le système comprenant :
un écran d'affichage ;
une mémoire pour stocker des informations sur les grilles de programmes et des informations liées à l'actualité ;
des moyens pour afficher une partie des informations sur les grilles de programmes dans une première zone de l'écran et une publicité dans une deuxième zone de l'écran en mode guide électronique des programmes ;
des moyens pour afficher une pluralité de boutons de menu, y compris un bouton nouvelles en mode guide électronique de programmes ;
des moyens pour afficher une pluralité de fenêtres en mosaïque reprenant dans une liste des titres de l'actualité lors de l'actionnement par l'utilisateur du bouton nouvelles, les fenêtres en mosaïque comprenant une icône télévision si un programme de télévision est associé au titre de l'actualité repris dans la liste ;
un dispositif d'entrée téléspectateur pour recevoir une commande utilisateur ;
un syntoniseur pour se régler automatiquement sur un canal retransmettant le programme associé à un titre de l'actualité repris dans la liste en réaction à une commande utilisateur d'établir un lien vers le canal depuis la fenêtre en mosaïque reprenant dans la liste le titre de l'actualité, et
des moyens pour avertir un téléspectateur d'une nouvelle information téléchargée dans la mémoire.

7. Système suivant la revendication 6 comprenant en outre une puce d'incrustation d'image pour amener un affichage du canal d'actualités prédéterminé dans une fenêtre incrustée.

8. Système suivant la revendication 6 comprenant en outre des moyens pour établir un lien vers un site Web se rapportant à un titre de l'actualité repris dans une liste dans la fenêtre en mosaïque.

9. Système suivant la revendication 6 comprenant en outre des moyens pour établir un lien vers des informations sur les activités régionales se rapportant à un titre de l'actualité repris dans une liste dans la fenêtre en mosaïque.
